# EUROPÄISCHE PATENTSCHRIFT

(11) **EP 2 361 860 B1**
(45) Veröffentlichungstag und Bekanntmachung des Hinweises auf die Patenterteilung: **18.03.2015**
(21) Anmeldenummer: 10196200.9
(22) Anmeldetag: 21.12.2010
(51) Int. Cl.: B65G 47/91, B25J 15/06

(54) **Unterdruck-Greifervorrichtung**
Underpressure gripper device
Dispositif de préhension par dépression

(30) Priorität: 24.02.2010 DE 102010000526
(43) Veröffentlichungstag der Anmeldung: 31.08.2011
(73) Patentinhaber: Krones AG, 93073 Neutraubling (DE)
(72) Erfinder: Wegener, Kai, 93073 Neutraubling (DE); Kirschner, Peter, 93073 Neutraubling (DE)
(74) Vertreter: Benninger, Johannes

(56) Entgegenhaltungen:
- WO-A1-93/06973
- FR-A1- 2 184 072
- JP-A- H11 254 365
- US-A- 5 048 804
- US-A1- 2009 273 199

## Beschreibung

Die vorliegende Erfindung betrifft eine Unterdruck-Greifervorrichtung mit den Merkmalen des unabhängigen Anspruchs 1 sowie ein Verfahren zur Aufnahme von Objekten.

Es sind zahlreiche Arten der verschiedensten Greifervorrichtungen bekannt. Eine Gruppe von Greifervorrichtungen nutzt Unterdruck zur Aufnahme von Objekten. Solche Unterdruck-Greifervorrichtungen werden oftmals auch als Vakuum-Greifer bezeichnet. Mit solchen Greifern lassen sich glattflächige Objekte besonders schonend aufnehmen, tragen und sanft wieder absetzen.

Bekannte Ausführungsvarianten dieser Unterdruck-Greifervorrichtungen weisen Ventilgehäuse mit darin verlaufenden Luftkanälen, wenigstens eine Unterdruckkammer und einen darin angeordneten Ventilkörper zum Verschließen oder Freigeben eines Luftkanals beim Ansaugen oder Absetzen des zu greifenden Objekts auf. Solche Ventilvarianten finden sich bspw. in der EP 0 456 884 A2 sowie in der JP 2001-341089 A.

Daneben sind Ventilbauarten bekannt, die bewegliche oder verschwenkbare Klappen zum Öffnen und Verschließen von Luftkanälen innerhalb des Ventilgehäuses aufweisen. Eine Variante mit heb- und senkbaren Ventilkörpern findet sich in der FR 2 709 478 A, während die EP 1 671 906 B1 einen Mechanismus mit schwenkbaren Klappen offenbart.

Die DE 697 24 012T2 offenbart schließlich eine Unterdruck-Greifervorrichtung mit einer Vakuumplatte mit einer Vakuumkammer, die mit einer Anlage zur Unterdruckerzeugung in der Vakuumkammer verbunden ist. Die Vakuumplatte weist eine ebene untere Platte mit mehreren Öffnungen auf, deren Unterseite mit einem elastischen, luftdichten Boden versehen ist. Innerhalb der Vakuumkammer befindet sich eine in vertikaler Richtung bewegliche Kugel, die in der Lage ist, die in der Platte befindliche Öffnung zu verschließen. Ein nicht von der Kugel erfasster Bypasskanal soll für eine permanente Aufrechterhaltung des Unterdrucks sorgen, um einen Artikel anheben zu können, auch wenn die Kugel den Ansaugkanal in der Vakuumkammer verschließt. Sobald ein anzuhebendes Objekt erfasst wird, fällt die Kugel aufgrund der sich in der Vakuumkammer ändernden Druckverhältnisse nach unten.
WO 93/06973 beschreibt eine gattungsgemässe Vorrichtung.

Ein Ziel der vorliegenden Erfindung besteht darin, eine einfach aufgebaute und kostengünstig zu fertigende Unterdruck-Greifervorrichtung zur Verfügung zu stellen, die einerseits ein schnelles Ansaugen von aufzunehmenden Artikeln und Objekten und andererseits deren zuverlässige Fixierung an der Greifervorrichtung ermöglicht.

Zur Erreichung dieser Ziele schlägt die vorliegende Erfindung eine Unterdruck-Greifervorrichtung mit den Merkmalen des unabhängigen Anspruchs 1 vor, die eine Kontaktfläche zur Aufnahme von Objekten und Artikeln, bspw. in Form einer unteren Saugplatte, aufweist, die durch Aufsetzen der Greifervorrichtung von oben unter gleichzeitiger Aufbringung eines Unterdruck zwischen der Saugplatte und der Oberseite des aufzunehmenden Objektes das Objekt fixieren und damit aufnehmen kann. Die Kontaktfläche bzw. Saugplatte weist wenigstens eine Ansaugöffnung auf, die mit einem Luftkanal und einem diesem Luftkanal zugeordneten Ventil in Verbindung steht, das einen innerhalb einer im Luftkanal befindlichen Unterdruckkammer beweglich angeordneten Ventilkörper mit einer Strömungsblende aufweist. Der Ventilkörper ist vorzugsweise zwischen zwei Endlagen weitgehend frei innerhalb der Unterdruckkammer beweglich, so dass er die Öffnungen des Luftkanals je nach Bedarf freigeben oder mit Hilfe der Strömungsblende weitgehend verschließen kann, um damit die Greifervorrichtung sensibel ansprechen zu lassen, sobald die Kontaktfläche auf eine Oberseite eines Objekts aufgesetzt wird, um dieses mit ausreichender Haltekraft aufnehmen zu können.

Die erfindungsgemäße Unterdruck-Greifervorrichtung ermöglicht die schnelle Erfassung von Objekten und das schnelle Änderung der Endlage des Ventils je nach dem Vorhandensein von Greifobjekten. Diese können sehr zuverlässig fixiert werden, was sich insbesondere daraus ergibt, dass nicht belegte Ansaugöffnungen weitgehend verschlossen werden und somit das Gesamtvakuum bzw. der gesamte aufgebaute Unterdruck nicht zu stark abfällt oder sogar zusammenbricht.

Wenn im vorliegenden Zusammenhang generell von einer Kontaktfläche mit wenigstens einer Ansaugöffnung die Rede ist, so ist damit keineswegs ausgeschlossen, dass mehrere Ansaugöffnungen und/oder mehrere Kontaktflächen mit jeweils einer zweckmäßigen Anzahl von gleichmäßigen, ggf. in einem regelmäßigen Raster über die Kontaktfläche, verteilten Ansaugöffnungen vorhanden sind. Die Anzahl und der Querschnitt der Ansaugöffnungen richten sich in erster Linie nach dem vorgesehenen Einsatzzweck der Greifervorrichtung, ihrer Traglast, der Größe und des Gewichts der aufzunehmenden Objekte etc. Hinsichtlich der Formgebung der unteren Ansaugöffnung sind mehrere Varianten möglich, bspw. ringförmige Anordnungen von Bohrungen oder sternförmige Durchbrüche. Vorzugsweise sind die Öffnungen so gestaltet, dass die Ventilplatte in einer beliebigen unteren Endlage die Ansaugöffnung möglichst wenig verdeckt. Die Mehrzahl der vorhandenen Ansaugöffnungen kann wahlweise mit einer gemeinsamen Unterdruckquelle verbunden sein. Die solchermaßen ausgestaltete Greifervorrichtung kann wahlweise durch Anordnung mehrerer Ansaugöffnungen als Flächengreifer, als sog. Saugerspinne oder als Saugerleiste ausgebildet sein. Im Bereich der Ansaugöffnungen können wahlweise elastische Elemente zur besseren Abdichtung der auf den Objekten aufliegenden Kontaktfläche und deren Ansaugöffnungen vorgesehen sein. Diese elastischen Elemente können in Zusammenwirkung mit den Ansaugöffnungen als Saugglocken fungieren bzw. ausgebildet sein. Die untere Ansaugöffnung kann wahlweise eine kreisrunde oder eine nahezu beliebige geometrische, schlitzartige, sternförmige oder anders gestaltete, nicht kreisrunde Kontur aufweisen. Auch kann die Ansaugöffnung durch eine Mehrzahl kleinerer Öffnungen, die vorzugsweise innerhalb einer geometrischen, insbesondere innerhalb einer kreisrunden Umrisskontur liegen, gebildet sein.

Der Ventilkörper liegt in einer ersten Endlage an einer oberen Öffnung des in die Unterdruckkammer mündenden Luftkanals an und verschließt diese bis auf die durch die durchlässige Strömungsblende vorgegebene Luftansaugung weitgehend. In seiner ersten Endlage ist der Ventilkörper durch den im Luftkanal herrschenden Unterdruck an die obere Öffnung des Luftkanals angesaugt. In seiner zweiten Endlage liegt der Ventilkörper an einer Innenseite der Kontaktfläche mit der darin befindlichen wenigstens einen Ansaugöffnung unter weitgehender Freihaltung des Öffnungsquerschnitts der wenigstens einen Ansaugöffnung auf.

Der Ventilkörper kann insbesondere durch eine flache Ventilplatte mit wenigstens einer darin befindlichen Bohrung als Strömungsblende gebildet sein. Bei dieser Variante ist der Ventilkörper als flache Scheibe ausgebildet, die sich innerhalb der Unterdruckkammer zwischen den beiden Endlagen auf und ab bewegen kann, um das in der Greifervorrichtung befindliche Ventil je nach Bedarf steuern zu können.

Erfindungsgemäß weist der Ventilkörper bzw. die Ventilplatte einen Durchmesser auf, der geringer ist als der Querschnitt der Unterdruckkammer. Erfindungsgemäß beträgt der gesamte Öffnungsquerschnitt der im Ventilkörper bzw. in der Ventilplatte befindlichen Strömungsblende weniger als die Hälfte, insbesondere weniger als ein Viertel oder Fünftel des Öffnungsquerschnitts des Luftkanals. Auf diese Weise kann sichergestellt werden, dass der Bypasskanal, der durch die Strömungsblende gebildet wird, das Ventil sehr schnell ansprechen lässt.

Die vorliegende Erfindung betrifft weiterhin ein Verfahren nach Anspruch 7, zur Aufnahme von Objekten mittels einer Unterdruck-Greifervorrichtung gemäß einer der zuvor beschriebenen Ausführungsvarianten. Bei dem Verfahren liegt der Ventilkörper bzw. die Ventilplatte solange an seiner ersten oberen Endlage an der oberen Öffnung des in die Unterdruckkammer mündenden Luftkanals an und verschließt diese bis auf seine durchlässige Strömungsblende weitgehend, bis die Kontaktplatte von oben auf ein zu greifendes Objekt aufgesetzt wird. Dadurch wird das Luftvolumen innerhalb der Unterdruckkammer über die Strömungsblende weitgehend evakuiert, so dass der Ventilkörper bzw. die Ventilplatte nach unten in die zweite Endlage auf die Innenseite der Kontaktplatte fällt. Dabei wird der Unterdruck zum Halten und Tragen des Objektes über den größeren Querschnitt des Luftkanals gehalten. Der Greifer kann wahlweise aber auch betrieben werden, indem ein Großteil der Ansaugöffnungen mit einem Greifobjekt belegt wird, wobei kein Vakuum am System anliegt. Wird das Vakuum bzw. der Unterdruck dann eingeschaltet, werden die abgedichteten Ansaugflächen evakuiert. Die Ventilplatte bleibt unten. Bei den nicht abgedichteten Ansaugöffnungen werden die Ventilplatten angesaugt und somit der Luftkanal weitgehend geschlossen. Das Gesamtvakuum wird dadurch schneller aufgebaut.

Die erfindungsgemäße Unterdruck-Greifervorrichtung eignet sich in ihren verschiedenen Konfigurationen besonders gut für einen Einsatz mit nicht exakt definierbaren räumlichen Zuordnungen zu den aufzunehmenden Objekten und/oder bei Objekten mit unregelmäßigen oder nicht exakt glattflächig geformten Oberseiten. Sie ist insbesondere dann gut einzusetzen, wenn nicht zuverlässig sichergestellt werden kann, dass alle Saugelemente auf einem Objekt aufliegen und damit belegt und somit abgedichtet sind. Hierbei besteht die Gefahr, dass durch die entstehende Leckluft der Unterdruck im Gesamtsystem abfällt oder unter ungünstigen Umständen sogar zusammenbricht. Hiergegen liefert die erfindungsgemäße Greifervorrichtung Abhilfe durch geeignete Gestaltung und Dimensionierung des Ventilkörpers und insbesondere der darin angeordneten Strömungsblende. Die erfindungsgemäße Gestaltung mit dem plattenförmigen, flachen Ventilkörper und der darin angeordneten, im nicht aktiven Zustand des Greifers weiterhin aktiv bleibenden Strömungsblende, liefert gegenüber den bisher bekannten Sauggreifern, die im Wesentlichen mit einer Kugel und einem Bypasskanal arbeiten, den Vorteil der sehr sensiblen Erkennung von aufzunehmenden Artikeln und Objekten, weil sich beim Aufsetzen der Saugglocke bzw. des Sauggreifers die in der Unterdruckkammer befindliche Platte bzw. Kugel unmittelbar senkt und den notwendigen Unterdruck aktiviert. Ist der Ventilkörper als flache Platte aus Metall oder Kunststoff ausgebildet, unterstützt dies das gewünschte Ansprechverhalten unter weitgehend allen Betriebsbedingungen. Wenn die Ansaugöffnung noch nicht vollständig durch das Objekt abgedichtet ist, kann der Ventilkörper bereits nach oben gezogen werden, da in diesem Fall die Strömung durch Leckluft normalerweise ausreicht, um die Ventilplatte nach oben zu ziehen. Ist sie oben, wird durch die Blende der Unterdruck aufgebaut und die Vakuumkammer soweit evakuiert, dass die Platte wieder nach unten fällt, um anschließend wieder angesaugt zu werden usw.

Das in der Greifervorrichtung befindliche Ventil bzw. die Mehrzahl von Ventilen saugt im Ruhezustand, bei dem es noch nicht auf ein zu greifendes Objekt aufgesetzt ist, nur eine geringe Luftmenge durch die stark drosseInde Strömungsblende mit ihrem gegenüber den im Ventil befindlichen luftführenden Kanälen relativ geringem Querschnitt. Der Ventilkörper bzw. die flache Ventilplatte aus Metall oder Kunststoff liegt dabei mit gegenüber dem Saugkanal des Ventils durchlässiger Strömungsblende an der Mündung des Luftkanals an und verschließt diesen weitgehend. Der resultierende Saugdruck wird dadurch stark reduziert, so dass sich die Greifervorrichtung in einem Art Bereitschaftszustand befindet. Die unteren Öffnungen in der Kontaktplatte bzw. Saugplatte, die auf die zu greifenden Objekte aufgesetzt werden, sind offen und lassen die durch die Strömungsblende strömende Luftmenge aufgrund ihres deutlich größeren Querschnitts ungehindert hindurchtreten. Die durch die Strömungsblende hindurchtretende sog. Leckluft ist relativ gering, wodurch bei schneller Reaktionszeit ein relativ günstiger Wirkungsgrad erreicht wird.

Sobald ein Objekt kontaktiert wird, führt dies zu einer Behinderung des Luftstroms durch die Öffnungen in der Kontaktplatte, da diese durch die Oberfläche des Objekts allmählich verschlossen werden. Die Saugplatte wird also abgedichtet, was zu einer Änderung der Druckverhältnisse innerhalb der Vakuumkammer des Ventils in der Greifervorrichtung führt. Die Strömungsblende in der Ventilplatte sorgt dafür, dass der Saugdruck am Ventilkörper abreißt und dieser nach unten fällt, wodurch sich der Luftkanal frei in die Unterdruckkammer des Ventils öffnen kann. Da nun der von der Absauganlage zur Verfügung gestellte Unterdruck innerhalb des Ventils wesentlich größere Kanalquerschnitte vorfindet, kann ein stärkerer Unterdruck aufgebaut und damit die notwendige Haltekraft zur Fixierung, zum Heben und Handhaben der Objekte zur Verfügung gestellt werden. Der Volumenstrom ist bei vollständiger Abdichtung der Saugplatte mit der Oberfläche des aufzunehmenden Objekts annähernd Null. Das Volumen in der Unterdruckkammer des Ventils kann über die zur Verfügung stehenden großen Kanalquerschnitte schnell evakuiert und somit der Unterdruck schnell aufgebaut werden.

Das Ventil der erfindungsgemäßen Unterdruck-Greifervorrichtung bietet aufgrund seines Aufbaus deutliche Vorteile gegenüber den bisher verwendeten Vakuumgreifern. Die Durchmesser der Luftkanäle, der Unterdruckkammer sowie der Strömungsblende ermöglichen eine Anpassung an unterschiedliche Einsatzzwecke und erforderliche Haltekräfte. Das Ventil erfordert einen geringen Fertigungsaufwand und kann einfach und kostengünstig mittels spanender Bearbeitung hergestellt werden. Eine besonders kostengünstige Variante kann auch in Schichttechnik gefertigt werden, bei der gestanzte oder mittels Laser- oder Wasserstrahl-Schneidverfahren bearbeitete Platten mittels Schrauben oder anderen geeigneten Verbindungstechniken schichtweise miteinander verbunden werden.

Die Erfindung wird nachfolgend anhand eines bevorzugten Ausführungsbeispiels unter Bezugnahme auf die beiliegenden Zeichnungen näher erläutert. Es sei jedoch betont, dass die Ausführungsbeispiele zur Veranschaulichung der Erfindung dienen, jedoch keinesfalls einschränkend zu verstehen sind.
Fig. 1 zeigt eine Schnittansicht eines Unterdruckventils, das Teil einer erfindungsgemäßen Unterdruck-Greifervorrichtung ist.
Fig. 2 zeigt in einer weiteren Schnittansicht eine Kontaktierung eines mit der Greifervorrichtung aufzunehmenden Objekts.
Fig. 3 zeigt in drei Schnittansichten die verschiedenen Zustände des Ventils bei der Annäherung an ein Objekt und bei dessen Kontaktierung.
Fig. 4 zeigt in einer schematischen Darstellung verschiedene Varianten der Gestaltung von unteren Ansaugöffnungen des Ventils sowie der Gruppierung mehrerer solcher Ansaugöffnungen in einer Greifervorrichtung.

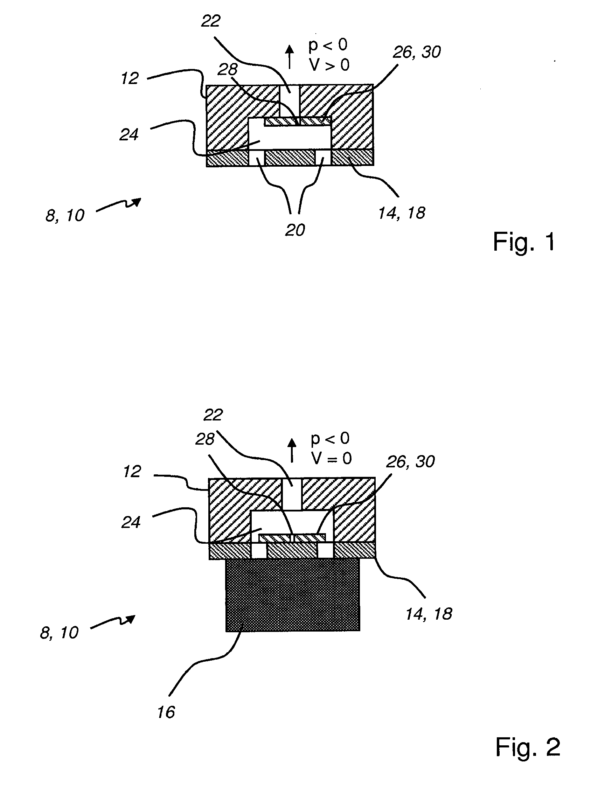

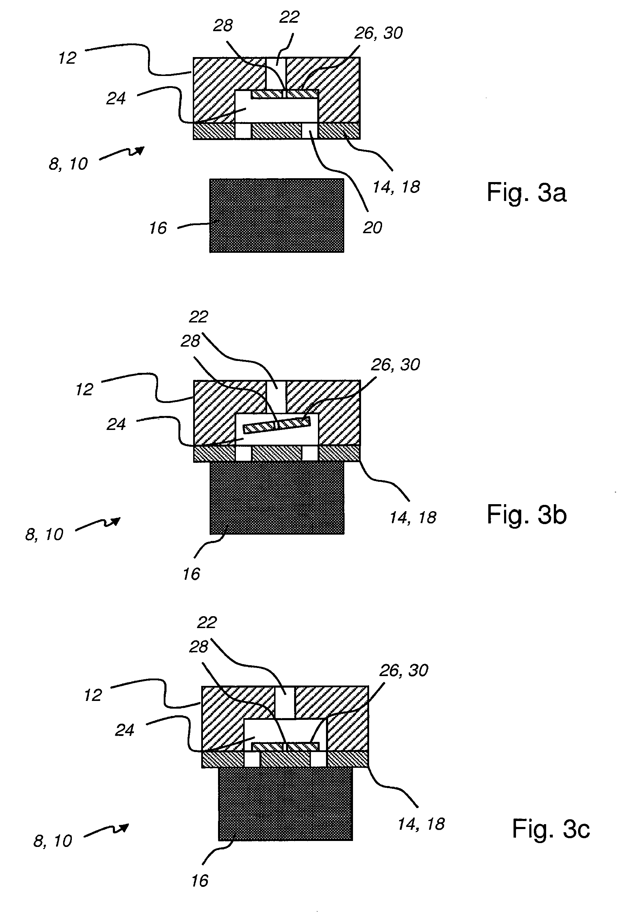

Anhand der schematischen Schnittdarstellungen der Figuren 1 bis 3 wird ein Unterdruckventil 10 erläutert, das den wesentlichen Teil einer hier nicht in ihrem gesamten Umfang dargestellten Unterdruck-Greifervorrichtung 8 bildet. Das Ventil 10 bzw. die Greifervorrichtung 8 weisen ein Ventilgehäuse 12 und eine daran angeordnete untere Kontaktfläche 14 zur Aufnahme von Objekten 16 (vgl. Figuren 2 und 3) auf. Diese Kontaktfläche 14 ist im vorliegenden Zusammenhang auch als untere Saugplatte 18 bezeichnet. Die Kontaktfläche 14 bzw. Saugplatte 18 weist im gezeigten Ausführungsbeispiel zwei Ansaugöffnungen 20 auf, die mit einem im Ventilgehäuse 12 angeordneten Luftkanal 22 in Verbindung stehen. Zwischen der Saugplatte 18 und dem Luftkanal 22 befindet sich eine Unterdruckkammer 24, innerhalb der ein beweglich angeordneter Ventilkörper 26 mit einer Strömungsblende 28 angeordnet ist. Der platten- oder scheibenförmige Ventilkörper 26 mit der mittig darin angeordneten Strömungsblende 28 ist im gezeigten Ausführungsbeispiel als flache Ventilplatte 30 bzw. als Ventilplättchen ausgebildet, das sowohl an der Oberseite der Unterdruckkammer 24 als auch an deren Unterseite, die durch die Saugplatte 18 begrenzt ist, dichtend aufliegen kann. Die Ventilplatte 30 ist somit zwischen zwei Endlagen weitgehend frei innerhalb der Unterdruckkammer 24 beweglich, so dass sie die Öffnung des Luftkanals 22 je nach Bedarf freigeben oder verschließen kann, um damit die Greifervorrichtung 8 sensibel ansprechen zu lassen, sobald die Kontaktfläche 14 auf eine Oberseite des Objekts 16 aufgesetzt wird, um dieses mit ausreichender Haltekraft aufnehmen zu können.

Der Luftkanal 22 sowie weitere, hier nicht dargestellte, Luftkanäle mehrerer solcher Ventile 10 ist/sind mit einer Unterdruckquelle verbunden. Die Greifervorrichtung 8 kann wahlweise durch Anordnung mehrerer Ansaugöffnungen 20 als Flächengreifer, als sog. Saugerspinne oder als Saugerleiste o. dgl. ausgebildet sein. Im Bereich der Ansaugöffnungen 20 oder um diese herum können wahlweise elastische Elemente zur besseren Abdichtung der auf den Objekten 16 aufliegenden Kontaktfläche 14 und deren Ansaugöffnungen 20 vorgesehen sein. Diese optionalen, hier nicht gezeigten, elastischen Elemente können in Zusammenwirkung mit den Ansaugöffnungen 20 als Saugglocken fungieren bzw. ausgebildet sein.

Der Ventilkörper 26 bzw. die Ventilplatte 30 liegt in einer ersten Endlage (vgl. Fig. 1) an der oberen Öffnung des in die Unterdruckkammer 24 mündenden Luftkanals 22 an und verschließt diesen bis auf die durch die durchlässige Strömungsblende 28 vorgegebene Luftansaugung. In seiner ersten Endlage ist der Ventilkörper 26 durch den im Luftkanal 22 herrschenden Unterdruck an die obere Öffnung des Luftkanals 22 angesaugt. In seiner zweiten Endlage (vgl. Fig. 2) liegt der Ventilkörper 26 an einer Innenseite der Kontaktfläche 14 mit den darin befindlichen Ansaugöffnungen 20 unter weitgehender Freihaltung des Öffnungsquerschnitts der beiden Ansaugöffnungen 20 auf.

Wie anhand der Figuren 1 bis 3 erkennbar ist, weist der Ventilkörper 26 bzw. die Ventilplatte 30 einen Außendurchmesser auf, der geringer ist als der Querschnitt der Unterdruckkammer 24. Der Öffnungsquerschnitt der im Ventilkörper 26 bzw. in der Ventilplatte 30 befindlichen Strömungsblende 28 ist zudem deutlich geringer als der gesamte Öffnungsquerschnitt des Luftkanals 22 bzw. der Ansaugöffnungen 20. So beträgt der Querschnitt der Strömungsblende 28 vorzugsweise deutlich weniger als die Hälfte, insbesondere weniger als ein Viertel oder Fünftel des Öffnungsquerschnitts des Luftkanals 22.

Die Darstellungen der Fig. 3 verdeutlichen anschaulich den Prozess der Kontaktierung und Aufnahme eines Objekts 16 mittels der erfindungsgemäßen Greifervorrichtung 8. Gemäß Fig. 3a liegt der Ventilkörper 26 bzw. die Ventilplatte 30 solange an seiner ersten, oberen Endlage an der oberen Öffnung des in die Unterdruckkammer 24 mündenden Luftkanals 22 an und verschließt diesen bis auf den Querschnitt der durchlässigen Strömungsblende 28 weitgehend, bis die Kontaktfläche 14 bzw. Saugplatte 18 von oben auf das zu greifende Objekt 16 aufgesetzt wird (vgl. Fig. 3b), wodurch das Luftvolumen innerhalb der Unterdruckkammer 24 über die Strömungsblende 28 weitgehend evakuiert wird und der Ventilkörper 26 bzw. die Ventilplatte 30 nach unten in die zweite Endlage auf die Innenseite der Kontaktplatte 18 fällt. Dadurch wird der Unterdruck zum Halten und Tragen des Objektes 16 über den größeren Querschnitt des Luftkanals 22 gehalten (vgl. Fig. 3c).

Das in der Greifervorrichtung 8 befindliche Ventil 10 bzw. die Mehrzahl von Ventilen 10 saugt im Ruhezustand, bei dem es noch nicht auf das zu greifende Objekt 16 aufgesetzt ist, nur eine geringe Luftmenge durch die stark drosselnde Strömungsblende 28 mit ihrem gegenüber den im Ventil 10 befindlichen luftführenden Kanälen 20, 22 relativ geringem Querschnitt. Der Ventilkörper 26 bzw. die flache Ventilplatte 30 aus Metall oder Kunststoff liegt dabei mit gegenüber dem Saugkanal 22 des Ventils 10 durchlässiger Strömungsblende 28 an der Mündung des Luftkanals 22 an und verschließt diesen weitgehend. Der resultierende Saugdruck wird dadurch stark reduziert, so dass sich die Greifervorrichtung 8 in einem Art Bereitschaftszustand befindet. Die unteren Öffnungen 20 in der Kontaktplatte 14 bzw. Saugplatte 18, die auf das zu greifende Objekt 16 aufgesetzt werden, sind offen und lassen die durch die Strömungsblende 28 strömende Luftmenge aufgrund ihres deutlich größeren Querschnitts ungehindert hindurchtreten.

Sobald das Objekt 16 kontaktiert wird, führt dies zu einer Behinderung des Luftstroms durch die Öffnungen 20 in der Kontaktplatte 14, da diese durch die Oberfläche des Objekts 16 allmählich verschlossen werden (Fig. 3b). Die Saugplatte 18 wird dabei abgedichtet, was zu einer Änderung der Druckverhältnisse innerhalb der Vakuumkammer 24 des Ventils 10 in der Greifervorrichtung 8 führt. Die Strömungsblende 28 in der Ventilplatte 30 sorgt dafür, dass der Saugdruck am Ventilkörper 26 abreißt und dieser nach unten fällt, wodurch der Luftkanal 22 frei in die Unterdruckkammer 24 des Ventils 10 öffnen kann. Da nun der von der Absauganlage zur Verfügung gestellte Unterdruck innerhalb des Ventils 10 wesentlich größere Kanalquerschnitte vorfindet, kann ein stärkerer Unterdruck aufgebaut und damit die notwendige Haltekraft zur Fixierung, zum Heben und Handhaben des Objekts 16 zur Verfügung gestellt werden. Der Volumenstrom ist bei vollständiger Abdichtung der Saugplatte 18 mit der Oberfläche des aufzunehmenden Objekts 16 annähernd Null. Das Volumen in der Unterdruckkammer 24 des Ventils 10 kann über die zur Verfügung stehenden großen Kanalquerschnitte schnell evakuiert und somit der Unterdruck schnell aufgebaut werden.

Die Greifervorrichtung 8 kann wahlweise mehrere Ansaugöffnungen 20 aufweisen und betrieben werden, indem mehrere bzw. die meisten der Ansaugöffnungen 20 mit einem Greifobjekt 16 belegt werden, wobei zunächst kein nennenswerter Unterdruck am System anliegt. Wird das Vakuum bzw. der Unterdruck dann eingeschaltet, werden die abgedichteten Ansaugflächen und abgedeckten Ansaugöffnungen 20 evakuiert. Die Ventilplatte 30 bleibt dabei unten. Bei den nicht abgedichteten Ansaugöffnungen 20 werden dagegen die Ventilplatten 30 jeweils angesaugt und nach oben bewegt, wodurch der jeweilige Luftkanal 22 weitgehend verschlossen wird. Das Gesamtvakuum wird dadurch schneller aufgebaut.

Soll das Objekt 16 wieder von der Greifervorrichtung 8 getrennt werden, so ist eine Abschaltung des am Luftkanal 22 anliegenden Unterdrucks erforderlich. Wenn der in der Unterdruckkammer 24 herrschende Unterdruck abgebaut wird, reicht der Saugdruck zwischen den Ansaugöffnungen 20 und der vorzugsweise glattflächigen Oberseite des Objekts 16 ab einem gewissen Druckniveau nicht mehr aus, um das Objekt 16 weiterhin zu halten.

Hinsichtlich der Formgebung der unteren Ansaugöffnung 20 sind mehrere Varianten möglich, bspw. ringförmige Anordnungen von Bohrungen oder sternförmige Durchbrüche. Vorzugsweise sind die Öffnungen 20 so gestaltet, dass die Ventilplatte 30 in einer beliebigen unteren Endlage die Ansaugöffnung 20 möglichst wenig verdeckt. Die Mehrzahl der vorhandenen Ansaugöffnungen 20 kann wahlweise mit einer gemeinsamen Unterdruckquelle verbunden sein.

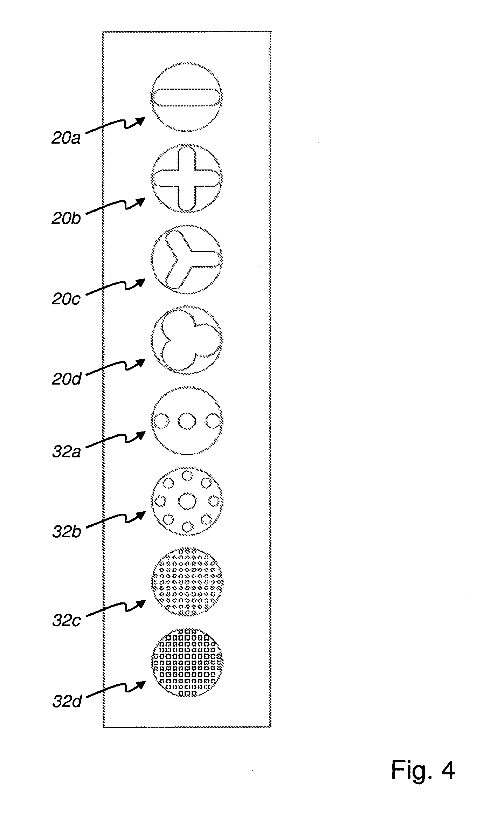

Die Darstellung der Fig. 4 zeigt in einer schematischen Darstellung verschiedene Varianten der Gestaltung von unteren Ansaugöffnungen 20 des Unterdruckventils 10 sowie der Gruppierung mehrerer solcher Ansaugöffnungen 20 in einer Greifervorrichtung 8. Die oberste Ansaugöffnung 20a weist die Gestalt eines Schlitzes mit parallelen Längsseiten und abgerundeten Schmalseiten auf, während die zweite Variante der Ansaugöffnung 20b zwei solche Schlitze aufweist, die in einem Winkel von 90° übereinander angeordnet sind, so dass die Ansaugöffnung 20b die Form eines Kreuzes aufweist. Die darunter gezeigte dritte Variante 20c weist eine Sternform mit drei jeweils gleich langen und gleich breiten Schenkeln auf, während die vierte Variante 20d eine abgewandelte Sternform mit relativ breiten Abschnitten aufweist, die bspw. durch Übereinanderlegen von drei Kreisen gestaltet sein kann.

Wahlweise können die unteren Ansaugöffnungen 20 des Ventils 10 auch entsprechend der unten gezeigten Varianten 32a, 32b, 32c oder 32d der Fig. 4 gruppiert werden. Die erste Variante 32a zeigt drei kleinere Bohrungen, die in einer Reihe nebeneinander angeordnet sein können. Die zweite Variante 32b der Gruppierung zeigt eine etwas größere Zentralbohrung und insgesamt acht beabstandet zu dieser angeordnete kleinere Bohrungen, die jeweils auf einem Ring liegen, der konzentrisch zur größeren Zentralbohrung angeordnet ist. Bei der darunter dargestellten dritten Gruppierungsvariante 32c sind zahlreiche kleine Bohrungen in einem regelmäßigen Muster angeordnet, das durch einen äußeren Kreis begrenzt ist. Innerhalb des Kreises sind die kleinen, jeweils kreisrunden Bohrungen in einem gitternetzartigen Muster angeordnet. Die darunter dargestellte vierte Gruppierungsvariante 32d ähnelt der dritten Variante 32c, wobei hier die Bohrungen jedoch jeweils einen quadratischen oder rechteckförmigen Umriss aufweisen.

### Bezugszeichenliste:

- 8: Unterdruck-Greifervorrichtung
- 10: Unterdruckventil
- 12: Ventilgehäuse
- 14: Kontaktplatte
- 16: Objekt, Artikel
- 18: Saugplatte
- 20: Ansaugöffnung
- 20a, 20b, 20c, 20d: Ansaugöffnungsvarianten
- 22: Luftkanal
- 24: Vakuumkammer
- 26: Ventilkörper
- 28: Strömungsblende
- 30: Ventilplatte
- 32a, 32b, 32c, 32d: Gruppierungen von mehreren Ansaugöffnungen

## Patentansprüche

1. Unterdruck-Greifervorrichtung (8) mit einer Kontaktfläche (14) zur Aufnahme von Objekten (16), die wenigstens eine Ansaugöffnung (20) aufweist, die mit einem Luftkanal (22) und einem darin befindlichen Ventil (10) in Verbindung steht, das einen innerhalb einer im Luftkanal (22) befindlichen Unterdruckkammer (24) beweglich angeordneten Ventilkörper (26) aufweist , wobei der Ventilkörper (26) als flache Ventilplatte aus Metall oder Kunststoff mit einer darin angeordneten Strömungsblende (28) ausgebildet ist, deren gesamter Öffnungsquerschnitt deutlich weniger als die Hälfte, insbesondere weniger als ein Viertel oder Fünftel des Öffnungsquerschnitts des Luftkanals (22) umfasst, wobei die flache Ventilplatte innerhalb der Unterdruckkammer (24) zwischen zwei Endlagen weitgehend frei innerhalb der Unterdruckkammer (24) beweglich angeordnet ist und in einer ersten Endlage die Ventilplatte an der oberen Öffnung des in die Unterdruckkammer (24) mündenden Luftkanals (22) anliegt und wobei in einer zweiten Endlage die Ventilplatte an einer Innenseite der Kontaktfläche (14) der Saugplatte (18) unter weitgehender Freihaitung des Öffnungsquerschnitts der Ansaugöffnung (20) anliegt,
wobei die Strömungsblende (28) sich in dem Auflagebereich der Ventilplatte an der Innenseite der Kontaktfläche (14) der Saugplatte (18) befindet, **dadurch gekennzeichnet, dass** in der ersten Endlage die Ventilplatte (26, 30) unter Verschließen der bis auf die durchlässige Strömungsblende (28) vorgegebene Luftansaugung an der oberen Öffnung des Luftkanals (22) anliegt.

2. Greifervorrichtung nach Anspruch 1, bei welcher der Ventilkörper (26) in seiner ersten Endlage durch den im Luftkanal (22) herrschenden Unterdruck an die in die Vakuumkammer (24) mündende obere Öffnung des Luftkanals (22) angesaugt ist.

3. Greifervorrichtung nach einem der Ansprüche 1 oder 2, bei welcher der Ventilkörper (26) durch eine flache Ventilplatte (30) mit wenigstens einer darin befindlichen Bohrung als Strömungsblende (28) gebildet ist.

4. Greifervorrichtung nach einem der Ansprüche 1 bis 3, bei welcher der Ventilkörper (26) bzw. die Ventilplatte (30) einen Durchmesser aufweist, der geringer ist als der Querschnitt der Unterdruckkammer (24).

5. Greifervorrichtung nach einem der Ansprüche 1 bis 4, bei welcher der gesamte Öffnungsquerschnitt der im Ventilkörper (26) bzw. in der Ventilplatte (30) befindlichen Strömungsblende (28) weniger als die Hälfte, insbesondere weniger als ein Viertel oder Fünftel des Öffnungsquerschnitts des Luftkanals (22) beträgt.

6. Greifervorrichtung nach einem der Ansprüche 1 bis 5, bei dem die untere Ansaugöffnung (20) eine geometrische, schlitzartige, sternförmige oder anders gestaltete, nicht kreisrunde Kontur aufweist.

7. Verfahren zur Aufnahme von Objekten (16) mittels einer Unterdruck-Greifervorrichtung (8) gemäß einem der Ansprüche 1 bis 6, bei dem der Ventilkörper (26) bzw. die Ventilplatte (30) solange an seiner ersten, oberen Endlage an der oberen Öffnung des in die Unterdruckkammer (24) mündenden Luftkanals (22) anliegt und diese bis auf seine durchlässige Strömungsblende (28) weitgehend verschließt, bis die Kontaktplatte (14 bzw. 18) von oben auf ein zu greifendes Objekt (16) aufgesetzt wird, wodurch das Luftvolumen innerhalb der Unterdruckkammer (24) über die Strömungsblende (28) weitgehend evakuiert wird und der Ventilkörper (26) bzw. die Ventilplatte (30) nach unten in die zweite Endlage auf die Innenseite der Kontaktplatte (14 bzw. 18) fällt, wobei der Unterdruck zum Halten und Tragen des Objektes (16) über den größeren Querschnitt des Luftkanals (22) gehalten wird.

## Claims

1. A vacuum gripping apparatus (8) with a contact surface (14) for picking up objects (16), which contact surface (14) has at least one suction opening (20), which is connected with an air duct (22) and a valve (10) therein, which valve (10) has a valve body (26), which is movably arranged within a vacuum chamber (24) in the air duct (22), wherein the valve body (26) takes the form of a flat valve plate of metal or synthetic material with a flow aperture (28) arranged therein, the entire aperture cross section of which comprises significantly less than half, in particular less than one fourth or one fifth, of the opening cross section of the air duct (22), wherein the flat valve plate is arranged within the vacuum chamber (24) to be largely freely movable between two stop positions within the vacuum chamber (24), and wherein the valve plate, in a first stop position, abuts on the top opening of the air duct (22) leading into the vacuum chamber (24), and wherein the valve plate, in a second stop position, abuts on an inner surface of the contact surface (14) of the suction plate (18), thereby leaving the opening cross section of the suction opening (20) largely free,
wherein the flow aperture (28) is located in the contact area of the valve plate at the inner surface of the contact surface (14) of the suction plate (18), **characterised in that** the valve plate (26, 30), in the first stop position, abuts on the top opening of the air duct (22), thereby sealing off the air intake, with the exception of the air intake allowed for by the permeable flow aperture (28).

2. The gripping apparatus as recited in claim 1 wherein the valve body (26), in its first stop position, is sucked to the top opening of the air duct (22) leading into the vacuum chamber (24) by the negative pressure prevailing in the air duct (22).

3. The gripping apparatus as recited in one of the claims 1 or 2 wherein the valve body (26) is formed by a flat valve plate (30) with at least one borehole as flow aperture (28) therein.

4. The gripping apparatus as recited in one of the claims 1 to 3 wherein the valve body (26) and the valve plate (30), respectively, have a diameter that is less than the cross section of the vacuum chamber (24).

5. The gripping apparatus as recited in one of the claims 1 to 4 wherein the entire aperture cross section of the flow aperture (28) located in the valve body (26) and accordingly in the valve plate (30) is less than one fourth or one fifth of the opening cross section of the air duct (22).

6. The gripping apparatus as recited in one of the claims 1 to 5 wherein the lower suction opening (20) has a geometric, slot-like, star-shaped, or differently designed, non-circular outline.

7. A method for picking up objects (16) by means of a vacuum gripping apparatus (8) according to one of the claims 1 to 6 wherein the valve body (26) or the valve plate (30) in its first, upper stop position abuts on the top opening of the air duct (22) leading into the vacuum chamber (24) and largely seals it off, with the exception of its permeable flow aperture (28), for as long as until the contact plate (14 or 18) is placed from above onto an object (16) intended for gripping, whereby the air volume within the vacuum chamber (24) is largely evacuated via the flow aperture (28) and the valve body (26) or the valve plate (30) falls downward to the second stop position onto the inner surface of the contact plate (14 or 18), wherein the negative pressure for holding and carrying the object (16) is maintained by the larger cross section of the air duct (22).

## Revendications

1. Dispositif de préhension par dépression (8) ayant une surface de contact (14) qui est destinée à recevoir des objets (16) et qui présente au moins une ouverture d'aspiration (20) qui est en communication avec un canal d'air (22) et avec une soupape (10) qui se trouve à l'intérieur de celui-ci et qui présente un corps de soupape (26) disposé de manière mobile à l'intérieur d'une chambre à dépression (24) située dans ledit canal d'air (22), ledit corps de soupape (26) étant réalisé en tant que plaque de soupape plate en métal ou en matière plastique avec un obturateur d'écoulement (28) y disposé dont l'ensemble de la section d'ouverture comprend sensiblement moins de la moitié, en particulier moins d'un quart ou d'un cinquième de la section d'ouverture du canal d'air (22), ladite plaque de soupape plate étant disposée à l'intérieur de ladite chambre de dépression (24) entre deux positions extrêmes de manière à être déplaçable dans une large mesure librement à l'intérieur de ladite chambre de dépression (24), et, dans une première position extrême, ladite plaque de soupape est en appui sur l'ouverture supérieure du canal d'air (22) débouchant dans la chambre de dépression (24), et, dans une deuxième position extrême, ladite plaque de soupape est en appui sur une face intérieure de ladite surface de contact (14) de la plaque d'aspiration (18) tout en maintenant dégagée dans une large mesure la section d'ouverture de l'ouverture d'aspiration (20), ledit obturateur d'écoulement (28) se trouvant dans la zone d'appui de la plaque de soupape sur la face intérieure de la surface de contact (14) de la plaque d'aspiration (18), **caractérisé par le fait que**, dans la première position extrême, la plaque de soupape (26, 30) est en appui sur l'ouverture supérieure du canal d'air (22) en fermant celle-ci à l'exception de l'aspiration d'air donnée par l'obturateur d'écoulement (28) perméable.

2. Dispositif de préhension selon la revendication 1, dans lequel le corps de soupape (26) est aspiré, dans sa première position extrême, par la dépression régnant dans le canal d'air (22), contre l'ouverture supérieure du canal d'air (22) laquelle débouche dans la chambre à vide (24).

3. Dispositif de préhension selon l'une quelconque des revendications 1 ou 2, dans lequel ledit corps de soupape (26) est formé par une plaque de soupape (30) plate ayant au moins un perçage comme obturateur d'écoulement (28) se trouvant dans celle-ci.

4. Dispositif de préhension selon l'une quelconque des revendications 1 à 3, dans lequel ledit corps de soupape (26) ou bien ladite plaque de soupape (30) présente un diamètre qui est inférieur à la section transversale de la chambre de dépression (24).

5. Dispositif de préhension selon l'une quelconque des revendications 1 à 4, dans lequel l'ensemble de la section d'ouverture de l'obturateur d'écoulement (28) se trouvant dans le corps de soupape (26) ou bien dans la plaque de soupape (30) est inférieure à la moitié, en particulier inférieure à un quart ou à un cinquième de la section d'ouverture du canal d'air (22).

6. Dispositif de préhension selon l'une quelconque des revendications 1 à 5, dans lequel l'ouverture d'aspiration (20) inférieure présente un contour géométrique non rond de type fente, en forme d'étoile ou formé d'une autre manière.

7. Procédé de réception d'objets (16) au moyen d'un dispositif de préhension par dépression (8) selon l'une quelconque des revendications 1 à 6, dans lequel le corps de soupape (26) ou bien la plaque de soupape (30) est en appui, dans sa première position extrême supérieure, sur l'ouverture supérieure du canal d'air (22) débouchant dans la chambre de dépression (24) et ferme celle-ci dans une large mesure, à l'exception de son obturateur d'écoulement (28) perméable, jusqu'à ce que la plaque de contact (14 ou bien 18) soit posée d'en haut sur un objet (16) à saisir, ce par quoi le volume d'air à l'intérieur de la chambre de dépression (24) est évacué dans une large mesure par l'obturateur d'écoulement (28) et ledit corps de soupape (26) ou bien la plaque de soupape (30) tombe vers le bas dans la deuxième position extrême sur la face intérieure de la plaque de contact (14 ou bien 18), la dépression pour maintenir et porter ledit objet (16) étant maintenue par la section plus importante du canal d'air (22).
